# NEUE EUROPÄISCHE PATENTSCHRIFT

(11) **EP 0 864 784 B2**
(45) Veröffentlichungstag und Bekanntmachung des Hinweises auf die Entscheidung über den Einspruch: **01.09.2004**
(45) Hinweis auf die Patenterteilung: 04.07.2001
(21) Anmeldenummer: 97104128.0
(22) Anmeldetag: 12.03.1997
(51) Int. Cl.: F16J 9/22

(54) **Kolbenring für eine Verbrennungskraftmaschine**
Piston ring for an internal combustion engine
Segment de piston pour un moteur à combustion interne

(43) Veröffentlichungstag der Anmeldung: 16.09.1998
(73) Patentinhaber: Sealed Power Europe GmbH, 30890 Barsinghausen (DE)
(72) Erfinder: Hartmann, Uwe Dipl.Ing., 30890 Barsinghausen (DE)
(74) Vertreter: Siekmann, Gunnar, Dipl.-Phys.

(56) Entgegenhaltungen:
- DE-A- 2 811 528
- DE-C- 3 538 978
- DE-C- 3 934 795
- FR-A- 2 699 600
- US-A- 4 438 937

## Beschreibung

Die Erfindung betrifft einen Kolbenring für einen Kolben einer Verbrennungskraftmaschine, insbesondere für die Anordnung in einem Aluminiumkolben.

Kolbenringe für Verbrennungskraftmaschinen haben im wesentlichen drei Aufgaben zu erfüllen. Sie dichten den Verbrennungsraum gegen den Kurbelraum ab, begrenzen den Ölverbrauch und leiten die vom Kolbenboden aufgenommene Wärme zur Zylinderwandung und durch diese zum Kühlmittel ab. Der Abdichtung des Verbrennungsraumes kann der Kolbenring nur gerecht werden, wenn zwischen der Zylinder- und der Ringlauffläche dauernd eine - bis auf die Stoßspielstelle - geschlossene Linienberührung besteht und zugleich eine der beiden Kolbenringflankenflächen gasdicht an der entsprechenden Kolbennutflanke anliegt. Dies geschieht dadurch, daß der Kolbenring unter der Einwirkung der Gaskräfte, die durch den Aufbau eines Drukkes zwischen Ringinnenmantelfläche und Nutgrund entstehen, verstärkt an die Zylinderwand angedrückt wird. Die Kolbenringe sitzen mit sehr wenig Spiel in der Kolbennut. Sie können darin aber Axialbewegungen, Radialbewegungen, Drehbewegungen und ein Schrägstellen ausführen. Diese Bewegungen werden durch die infolge der Kolbenbewegungen wirksamen Massenkräfte und durch den Verbrennungsdruck hervorgerufen. Auf den Ringflanken kann es dabei zu verschiedenen Verschleißerscheinungen kommen.

Um diesen Verschleißerscheinungen entgegentreten zu können, werden in modernen Hochleistungsmotoren die verschiedensten Kolbenringwerkstoffe mit unterschiedlichen Oberflächenbehandlungen und Härteverfahren eingesetzt. Zur kostengünstigen Verschleißminimierung an den Flankenflächen haben sich insbesondere allseitig nitrierte Kolbenringe durchgesetzt. Der Grundwerkstoff kann ein hochchromhaltiger Stahl oder auch Guß sein.
Der Nachteil dieser Kolbenringe ist, daß sie in Verbindung mit Aluminiumkolben zu Aluminiumaufplattierungen neigen.
Die Aufplattierungen treten vornehmlich an der unteren der Kolbenringflankenflächen auf, d. h. an der dem Verbrennungsdruck abgewandten Flankenfläche. Zusätzlich haben die Temperatur und der herrschende Schmierstoffmangel, insbesondere bei dem obersten Kompressionsring, einen erheblichen Einfluß.

Zur Herabsetzung der Haftreibung eines Kolbenringes in der Kolbennut ist es durch die DE-PS 35 38 978 C1 bekannt, eine Druckentlastung an der unteren Flanke des Kolbenringes dadurch zu erreichen, daß der Gasdruck von der Kolbenringoberseite durch Bohrungen oder Kanäle in eine Rille in der unteren Kolbenringseitenfläche geführt wird.
Die US-PS 4,438,937 offenbart dagegen Maßnahmen zur Trägheitsreduzierung und Gewichtentlastung durch Materialaussparungen in den Kolbenringseitenflächen. Neben der aufwendigen Mehrarbeit wird insbesondere bei großen Dieselmotoren, in welchen Kolben aus Aluminium eingesetzt sind, die Gefahr von Aluminiumaufplattierungen nicht beseitigt. Zur Erzielung einer Linienförmigen Dichtlinie ist aus der gattungsgemäßen DE 28 11 528 ein Kolbenring mit einer sich in Umfangsrichtung über die Breite der Flankenfläche erstreckenden Konkaven Vertiefung bekannt.

Gußringe haben offene Graphitlamellen an den Flankenflächen. Hierdurch wird eine Schmierwirkung erzielt, so daß das Problem der Aufplattierung oder Mikroverschweißung an Kolbenringen aus Guß seltener auftritt.

Um Aluminiumaufplattierungen an Kolbenringen, die in Otto-Motoren eingesetzt sind, zu verhindern, ist es bekannt, die Flankenflächen mit verschiedenen Einlaufbeschichtungen zu versehen. So werden nach der Patentschrift DE 35 02 143 C3 Einlaufbeschichtungen aus Manganphosphat, Zinkphosphat oder Tri-Eisen-Tetraoxid (Fe₃O₄) für nitrierteStahlkolbenringe vorgesehen. Die äußerste, als Verbundschicht bezeichnete Schicht wird entfernt und eine der Oxidschichten direkt auf die darunterliegende Diffusionsschicht aufgetragen. Das erfordert jedoch einen zusätzlichen Bearbeitungsvorgang, wobei zu berücksichtigen ist, daß die abzuarbeitende Verbundschicht durch darin gebildetes Eisennitrit sehr hart ist.

In Dieselmotoren entstehen wesentlich höhere Verbrennungsdrücke als in Ottomotoren. Hierdurch wird der Verschleiß an den Flankenflächen der Kolbenringe erhöht. Deshalb wird insbesondere bei den Dieselmotoren verwendeten Aluminiumkolben zur Verhinderung des Nutenverschleißes ein Ringträger eingebaut, der üblicherweise aus austenitischem Gußeisen besteht. Das Problem der Aluminiumaufplattierungen kann damit zwar verhindert werden, jedoch ist diese Möglichkeit mit erheblichen Kosten verbunden.

Man hat femer versucht, das Problem der Aluminiumaufplattierungen mit Hilfe einer gezielten Oberflächenrauheit zu lösen. Deren Einfluß ist bis heute jedoch noch nicht zuverlässig ermittelt worden. Teilweise werden die Ringe mit Plateaus auf der Flankenfläche gefertigt, um ein Schmiermittelreservoir zu bilden. Es ist aber nicht auszuschließen, daß trotzdem eine sog. "Rauhabnutzung" auftritt, die dann die Kolbenut durch einen Schmirgeleffekt unzulässig verändert.

Der Erfindung liegt die Aufgabe zugrunde, einen Kolbenring nach dem Oberbegriff des Patentanspruchs 1 zu schaffen, um Aluminiumaufplattierungen, die auch als Mikroverschweißungen bezeichnet werden, auf den Flankenflächen des Kolbenrings sicher zu verhindern, ohne daß damit kostenaufwendige Vorkehjungen verbunden sind. Die Erfindung löst die Aufgabe mit den Merkmalen des Patentanspruchs 1. Bei einem Kolbenring, bei welchem mindestens die dem Verbrennungsdruck abgewandte Flankenfläche mit einer sich in Umfangsrichtung erstreckenden Vertiefung von 0,5 µm bis 5 µm, vorzugsweise 2 bis 3 µm versehen ist, befindet sich die Vertiefung im mittleren Bereich der Flankenfläche. Entsprechend zeigt die Flankenfläche im Querschnitt eine konkave Ausbildung, wodurch Schmierstoff aufgenommen werden kann und das Aufplattieren von Aluminium verhindert wird. Es ist anzunehmen, daß sich in dieser umlaufenden Nut zusätzlich ein Schmiermittelreservoir entwickeln kann, wodurch der Kolbenring bei der Schlagbeanspruchung abgefedert wird und nicht der vollen Reibung mit der Kolbennut des Aluminiumkolbens ausgesetzt ist. Motorenversuche haben sehr geringe, sich selbst lösende Aluminiumaufplattierungen gezeigt. Teilweise konnte nachgewiesen werden, daß überhaupt keine Aufplattierungen entstehen. Die Vertiefung kann, soweit notwendig, auf beiden Flankenflächen vorgesehen sein. Die vorteilhaftesten Ergebnisse haben sich bei Vertiefungen von 2 bis 3 µm gezeigt, die etwa in der Flächenmitte der Kolbenringflanken umlaufen. Vorzugsweise erstreckt sich die Vertiefung über den gesamten Umfang der Flankenfläche. Ferner besteht die Möglichkeit, die Vertiefung in Segmente zu unterteilen, ohne die angestrebte Wirkung zu gefährden.

Weitere den Erfindungsgegenstand vorteilhaft gestaltende Merkmale sind in den Unteransprüchen angegeben.

In der Zeichnung sind Querschnittsformen von erfindungsgemäß gestalteten Kolbenringen schematisch dargestellt. Alle Ausführungsbeispiele sind mit Vertiefungen an beiden Flankenflächen versehen. Ihre Tiefen betragen vorzugsweise 2 bis 3 µm. Die Breiten sind jedoch verschieden und nehmen von b₁ gemäß Figur 1 über b₂ nach Figur 2 bis b₃in Figur 3 zu.

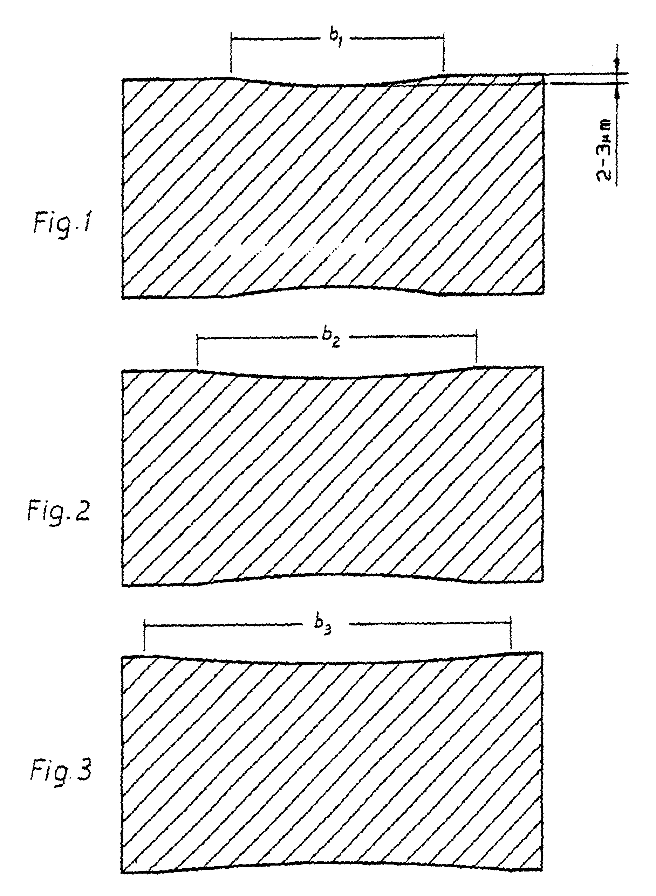

## Patentansprüche

1. Kolbenring für einen Kolben einer Verbrennungskraftmaschine, insbesondere für die Anordnung in einem Aluminiumkolben, wobei mindestens die dem Verbrennungsdruck abgewandte Flankenfläche mit einer sich in Umfangsrichtung erstreckenden Vertiefung von 0,5 bis 5 µm, vorzugsweise 2 bis 3 µm versehen ist, welche sich im mittleren Bereich der Flankenfläche befindet, **dadurch gekennzeichnet, daß** die Breite (b₁, b₂, b₃) der Vertiefung kleiner ist als die Breite der Flankenfläche.

2. Kolbenring nach Anspruch 1, **dadurch gekennzeichnet, daß** sich die Vertiefung über den gesamten Umfang der Flankenfläche erstreckt.

3. Kolbenring nach Anspruch 1, **dadurch gekennzeichnet, daß** die Vertiefung in Segmente unterteilt ist.

## Claims

1. Piston ring for a piston of an internal combustion engine, in particular to be disposed in an aluminium piston, whereby at least the flank face which is remote from the combustion pressure is provided with a recess measuring 0,5 µm to 5 µm, preferably 2 to 3 µm, which extends in the circumferential direction and is located in the central region of the flank face, **characterised in that** the widths (b₁, b₂, b₃) of the recess is smaller than the widths of the flank face.

2. Piston ring according to claim 1, **characterised in that** the recess extends over the entire circumference of the flank face.

3. Piston ring according to claim 1, **characterised in that** the recess is divided into segments.

## Revendications

1. Segment de piston pour un piston d'un moteur à combustion, notamment pour l'agencement dans un piston en aluminium, dans lequel au moins la face de flanc éloignée de la pression de combustion est pourvue d'un creux de 0,5 à 5 µm, de préférence de 2 à 3 µm, s'étendant dans la direction périphérique, qui se trouve dans la zone médiane de la face de flanc, **caractérisé en ce que** la largeur (l₁, l₂, l₃) du creux est inférieure à la largeur de la face de flanc.

2. Segment de piston selon la revendication 1, **caractérisé en ce que** le creux s'étend sur tout le pourtour de la face de flanc.

3. Segment de piston selon la revendication 1, **caractérisé en ce que** le creux est divisé en segments.
